**Europäisches Patentamt**

**European Patent Office**

**Office européen des brevets**

(19)

(11) Veröffentlichungsnummer: **0 106 972**
A2

(12) # EUROPÄISCHE PATENTANMELDUNG

(21) Anmeldenummer: 83108269.8

(22) Anmeldetag: 23.08.83

(51) Int. Cl.³: **B 67 D 1/04**, B 67 C 3/20

(30) Priorität: 24.09.82 DE 3235314
09.12.82 DE 3245594

(43) Veröffentlichungstag der Anmeldung: 02.05.84
**Patentblatt 84/18**

(84) Benannte Vertragsstaaten: **AT CH GB LI NL**

(71) Anmelder: **Bremerland-Molkerei eG, Admiralstrasse 54, D-2800 Bremen 1 (DE)**

(72) Erfinder: **Zimmer, Albert, Ing. grad., Parkallee 46, D-2800 Bremen 1 (DE)**

(74) Vertreter: **Goddar, Heinz J., Dr. et al, FORRESTER & BOEHMERT Widenmayerstrasse 4/I, D-8000 München 22 (DE)**

(54) Verfahren zur dosierten Abgabe von Frischmilch im Selbstbedienungsverfahren sowie eine nach dem Verfahren arbeitende Abgabestation.

(57) Verfahren zur dosierten Abgabe von Frischmilch aus einem Vorratsbehälter im Selbstbedienungsverfahren, bei dem die Milch aus dem Vorratsbehälter über einen oberen absperrbaren Zulauf in ein Meßgefäß gefördert und bei aufgefülltem Meßgefäß über einen unteren ebenfalls absperrbaren Ablauf aus dem Meßgefäß in die Verbraucherflasche fließt, wobei, vorzugsweise während durch einen Füllungsfühler über ein elektronisches Steuergerät Schaltimpulse zur Ventilbetätigung ausgehen, dadurch gekennzeichnet,

a) daß die gesamte Anlage unter einem Überdruck von sterilfiltrierter Druckluft steht,

b) daß mit der sterilfiltrierten Druckluft die Frischmilch aus dem Vorratsbehälter (1) über ein geöffnetes Einlaßventil (3) in das während des Füllvorganges durch ein Auslaßventil (6) unten geschlossene Meßgefäß (4) gedrückt wird, bis dieses gefüllt ist,

c) danach über einen elektrischen Impuls eines Füllfühlers (14) das Einlaßventil (3) geschlossen und gleichzeitig oder kurz danach das Auslaßventil (6) geöffnet wird,

d) die im Meßgefäß (4) befindliche Milch sodann unter direkter Beaufschlagung sterilfiltrierter Druckluft aus dem Meßgefäß (4) herausgedrückt und der Verbraucherflasche zugeführt wird und daß schließlich

e) unmittelbar nach der Entleerung das Meßgefäß (4) vorzugsweise sofort neu gefüllt wird, so daß stets eine genau abgemessene Milchmenge abgabebereit ist, sowie Milchabgabestation zur Durchführung des Verfahrens.

Bremerland Molkerei eG, Admiralstraße 54, 2800 Bremen 1

------------------------------------------------------------

Verfahren zur dosierten Abgabe von Frischmilch im Selbstbedienungsverfahren sowie eine nach dem Verfahren arbeitende Abgabestation

------------------------------------------------------------


Die Erfindung betrifft ein Verfahren zur dosierten Abgabe von Frischmilch aus einem Vorratsbehälter im Selbstbedienungsverfahren gemäß der im Oberbegriff des Anspruches 1 angegebenen Art sowie eine nach dem Verfahren
arbeitende Abfüllstation.

Die Erfindung hat sich die Aufgabe gestellt, die Abgabe
von Frischmilch direkt an den Verbraucher unter Benutzung
von an das Abgabesystem angepaßten Flaschen zu vereinfachen und zu beschleunigen. Ferner soll die Milch schonend
ohne Schaumbildung in das Meßgefäß und anschließend in
die Verbraucherflasche gefördert werden. Außerdem wird
angestrebt, die Haltbarkeit der Milch in einer solchen
Abgabestation zu verlängern. Schließlich soll dem Be-

422

0106972

treiber einer solchen Station, z. B. einer Supermarkt
mit großen Milchumsätzen der umständliche Behälterwechsel
erspart bleiben.

Gemäß der Erfindung wird diese Aufgabe durch die im
kennzeichnenden Teil des Anspruches 1 zum Ausdruck kommenden
Merkmale gelöst.

Das vorliegende Verfahren macht sich die Verwendung von
sterilfiltrierter Druckluft zu nutze. Durch die Verwendung
keimarmer Druckluft zur Förderung der Milch wird folgendes
erreicht:

1. In der gesamten Abfüllstation wird ein Überdruck erzeugt der verhindert, daß bakterienangereicherte Außenluft in die Station eindringen kann, so daß die Abfüllung
   der Milch vom Vorratsbehälter bis hin zur Verbraucherflasche in bakteriologisch einwandfreier Weise erfolgt.

2. Durch die keimarme Behandlung der Milch wird ihre Haltbarkeit in der Abfüllstation erheblich verlängert.

3. Die Ausschaltung von Pumpen zur Milchförderung läßt
   eine schonende Behandlung der Milch zu, so daß die unerwünschten Fettverklumpungen und das Festsetzen von Milchfett an den Pumpaggregaten nicht mehr auftreten kann.

4. Für Betreiber von Abgabestationen mit großen Milchumsätzen lassen sich nunmehr mehrere Vorratsbehälter zu
   einer Batterie kommunizierend zusammenfassen, so daß
   keine Unterbrechung der Milchabgabe bei einem leergepumpten Behälter erfolgt und der umständlich und schwere Behälterwechsel mit der damit verbundenen Koppelung
und Umsetzung der Steuer- und Meßeinrichtungen entfällt.

5. Sowohl das Füllen des Meßgefäßes als auch das Entleeren
desselben, läßt sich mit Druckluft in einer wesentlich
kürzeren Zeit erledigen, so daß eine erheblich dichtere
Abfüllfolge ermöglicht wird.

Schließlich wird der Zeitbedarf für das Abfüllen auch noch
dadurch reduziert, daß das Meßgefäß sofort nach jeder Milchentnahme wieder gefüllt wird und sich somit bereits für
die nächste Milchentnahme in Bereitschaft befindet.

Eine besonders bevorzugte Ausführungsform der Erfindung
zeichnet sich dadurch aus, daß als Meßgefäß ein geschlossenes Überlaufgefäß verwendet wird, die Entlüftungsleitung nach Überfüllung des Meßgefäßes durch Impulsausgabe des Füllungsfühlers geschlossen und die Leitung
zur direkten Druckbeaufschlagung des Meßgefäßes geöffnet
wird, wobei unmittelbar danach das Einlaßventil geschlossen
wird, während sich das Auslaßventil zur Abgabe der Milch
an den Verbraucher durch Knopfdruck o. dgl. öffnen läßt.
Diese Ausführungsform hat den Vorteil, daß das erfindungsgemäße Verfahren auch für sehr genau arbeitende Überlauf-
Meßgeräte verwendbar ist. Bisher konnten Überlauf-Meßgefäße nur bei Pumpenförderung verwendet werden, bei
welcher die überlaufende Milch drucklos und ungehindert
wieder in den Vorratsbehälter zurückfließen kann. Bei
der Förderung mit Druckluft kann die überschüssige Milch
jedoch nicht so ohne weiteres in den Vorratsbehälter zurückfließen, da die in ihm befindliche Druckluft einer solchen

0106972

Rückströmung entgegenwirkt. Eine Lösung dieses Problems
ließe sich dadurch herbeiführen, wenn man den Verdichter
abschaltet und danach den Vorratsbehälter drucklos macht.
Dieses Verfahren hätte jedoch gravierende Nachteile, da
der Vorratsbehälter nach jeder Milchentnahme wieder nue
mit Druckluft aufgefüllt werden müßte, was nicht nur
zeitraubend und unrationell ist, da immer gewartet werden
muß, bis der erforderliche Luftdruck erreicht ist. Für
eine wirtschaftlich tragbare Milchversorgung, z.B. in
Supermärkten mit großen Milchumsätzen und dichter Abgabefolge, ist diese Methode völlig ungeeignet. Dadurch, daß
erfindungsgemäß bei der vorstehend beschriebenen bevorzugten
Ausführungsform dem überfüllten Meßgefäß bei geöffnetem
Einlaßventil Druckluft gleicher Druckstufe im Gegenstrom
zugeführt wird, wie im Vorratsbehälter vorhanden, wird
ein Druckausgleich hergestellt, der ein sofortiges Zurückfließen der überschüssigen Milch zur Folge hat. Die im
Meßgefäß verbleibende genau dosierte Menge kann jederzeit
nach dem Schließen des Einlaßventiles vom Verbraucher entnommen werden. Mit diesem Verfahren läßt sich somit ohne
Zeitverlust und in wirtschaftlicher Weise die Milch auch
bei einem Überlauf-Meßgefäß aus einer mit Druckluft fördernden
Abgabestation entnehmen.

Besonders bevorzugte Ausführungsformen des erfindungsgemäßen Verfahrens sowie die erfindungsgemäße Abgabestation
sowie deren bevorzugte Ausführungsformen sind Gegenstand
der entsprechenden Unteransprüche.

Weitere Merkmale und Vorteile der Erfindung ergeben sich
aus der nachfolgenden Beschreibung, in der Ausführungsbeispiele der nach dem erfindungsgemäßen Verfahren arbeitenden
Milchabgabestation schematisch wiedergegeben sind. Dabei zeigt:

Fig. 1      ein erstes Ausführungsbeispiel einer
Milchabgabestation nach der Erfindung;

Fig. 2      eine aus mehreren Vorratsbehältern gebildete Abgabestation in Batterieschaltung; und

Fig. 3      ein weiteres Ausführungsbeispiel einer
erfindungsgemäßen Milchabgabestation.

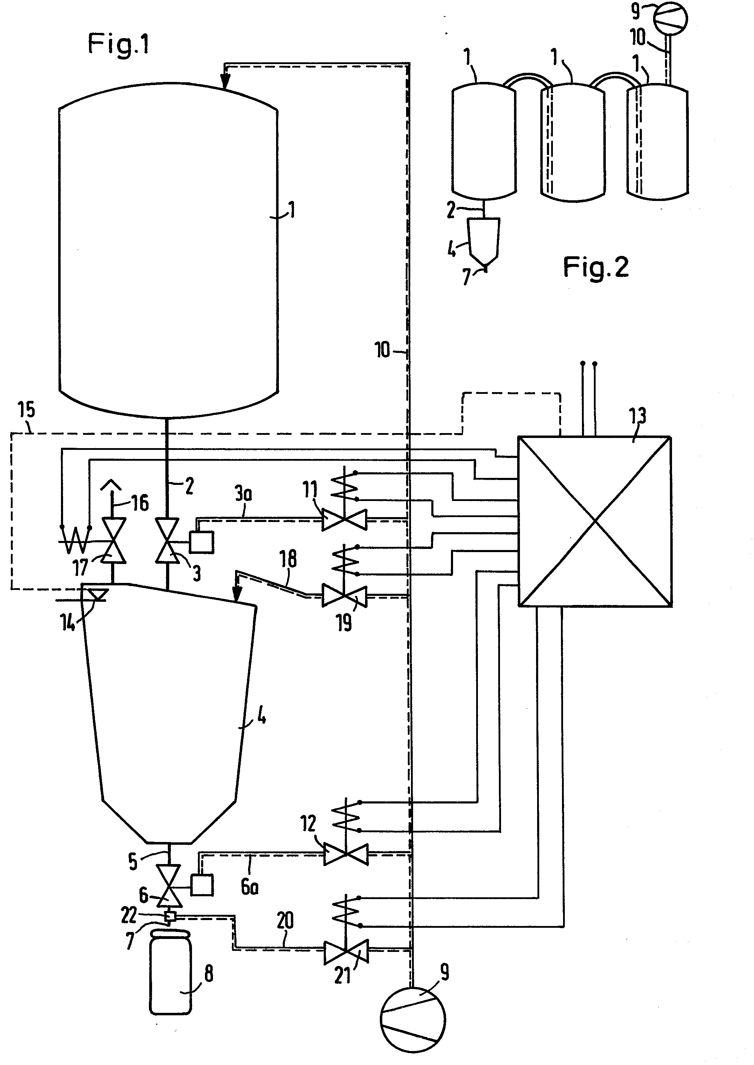

Wie Fig. 1 erkennen läßt, strömt aus einem Vorratsbehälter
1 für Frischmilch die Milch über eine Leitung 2 und ein
druckluftgesteuertes Einlaßventil 3 in ein Meßgefäß 4.
Nach Auffüllung des Meßgefäßes 4 und der damit erfolgten
Dosierung strömt die Milch über eine Leitung 5 und einem
druckluftgesteuerten Auslaßventil 6 durch den Auslaßstutzen 7 in die Verbraucherflasche 8.

Der Vorratsbehälter 1, der vorzugsweise ein Fassungsvermögen von etwa 200 bis 250 Liter hat, wird von sterilfiltrierter Druckluft beaufschlagt, die von einem Verdichter 9 erzeugt wird und über eine Versorgungsleitung
10 dem Vorratsbehälter 1 keimarm zugeführt wird. Die
beiden druckluftgesteuerten Ventile 3 und 6, die zweckmäßigerweise Bestandteil des Meßgefäßes sind werden durch
Magnetventile 11 und 12 gesteuert, die von einer programmierbaren Steueranlage 13 ihre Schaltimpulse erhalten.

Das für die Aufnahme einer bestimmten Milchmenge geeichte
Meßgefäß, das vorzugsweise einen oder zwei Liter aufnimmt,
besitzt einen Füllungsfühler 14, der über eine Leitung 15
mit der Steueranlage 13 in elektrischer Verbindung steht.

An der Oberseite des Meßgefäßes 4 befindet sich eine
Entlüftungsleitung 16, die beim Füllen des Meßgefäßes
geöffnet und beim Ablassen ddurch ein Magnetventil 17
absperrbar ist.

Die im Meßgefäß aufgefüllte Milch wird über eine Nebenleitung  18 der Versorgungsleitung 10 ebenfalls mit
sterilfiltrierter Druckluft beaufschlagt,  wodurch die
Milch beschleunigt aus dem Meßgefäß 4 herausgedrückt
und in die Verbraucherflasche 8 gefüllt wird. Ein in
der Leitung sitzendes Magnetventil 19 gibt die Druckluft zur Entleerung des Meßgefäßes frei und sperrt die
Leitung 18 danach sofort für den neuen Füllvorgang wieder
ab, während das Ventil 17 die Entlüftungsleitung 16
wieder frei gibt.

Um eine bakteriologisch einwandfreie Abfüllzone am Milchaustritt zu erhalten, wird im Bereich des Auslaßstutzens
7 während des Abfüllbetriebes ein anhaltender keimarmer
Druckluftstrom abgeblasen. Die Druckluft wird über
eine Leitung 20, die unter Zwischenschaltung eines Magnetventils 21 mit der Versorgungsleitung 10 verbunden ist,
einem Auslaßkopf 22 zugeführt, der mit dem Auslaßstutzen 7
zu einem vom Meßkopf 4 abnehmbaren Bauteil zusammengefaßt
ist.

Die Wirkungsweise ist nun folgende. Der Vorratsbehälter 1
steht unter dem Druck der vom Verdichter 9 geförderten
keimarmen Druckluft die das Meßgefäß 4 gefüllt hat. Das
Ventil 3 in der Leitung 2 ist geöffnet, das Ventil 6
in der Leitung 5 ist geschlossen und das Ventil 17 hat die
Entlüftungsleitung 16 abgesperrt. Auch das Ventil 19 in der Leitung 18 befindet sich im Schließzustand, während das Venteil 21 in der Leitung 20 während der Milchverkaufszeiten geöffnet bleibt und den Milchentnahmebereich keimarm hält.

Für die Milchentnahme stellt der Verbraucher seine Flasche 8 unter den Auslaßstutzen 7 und leitet z. B. über einen nicht dargestellten Druckknopfschalter den Abfüllvorgang ein. Über die Regelanlage 13 werden nun folgende Vorgänge ausgelöst: Das Ventil 3 wird geschlossen, das Ventil 19 wird geöffnet und das Ventil 6 wird geöffnet. Mit der über die Leitung 18 zugeführten Druckluft, wird die im Meßgefäß 4 dosiert gehaltene Frischmilch aus dem Gefäß in die Verbraucherflasche gedrückt.

Nach dem Entleeren des Meßgefäßes 4 werden über die Regelanlage 13 folgende Vorgänge gesteuert: Die Ventile 6 und 19 werden geschlossen, die Ventile 3 und 17 werden geöffnet, so daß sofort nach dem Entleeren des Meßgefäßes 4 die auf dem Flüssigkeitsspiegel im Vorratsbehälter 1 ruhende Druckluft erneut Frischmilch in das Meßgefäß 4 drückt. Einfüllungsfühler 14 meldet der Regelanlage 13, daß das Meßgefäß 4 gefüllt ist und die Station für die nächste Milchabgabe in Bereitschaft steht.

Durch das neuartige Verfahren ist es möglich z. B. bei Supermärkten mit großem Milchbedarf mehrere Vorratsbehälter 1 kommunizierend zu koppeln, wobei die Druckluft dem letzten ausgabefernen Vorratsbehälter zugeführt und die Milch dem ersten Vorratsbehälter entnommen wird. Diese Methode erspart dem Betreiber solcher Abgabestationen bei einem leergefahrenen Vorratsbehälter den Behälteraustausch mit den damit verbundenen umständlichen Koppelungs-

- 8 -

und Rangiermaßnehmen (Fig. 2).

Ein weiterer Vorteil ergibt sich durch die Verwendung von
sterilfiltrierter Druckluft dadurch, daß sich die gesamte
Milchabgabestation bakteriologisch einwandfrei, d. h.
keimarm betreiben läßt, da die mit Keimen angereicherte
Außenluft infolge des stets herrschenden Überdruckes in
der Station an keiner Stelle Zugang zur Frischmilch findet.
Durch diese Maßnahme wird eine erheblich längere Haltbarkeit der Frischmilch erreicht.

Selbstverständlich ist die Abgabestation nicht auf die Abgabe
von Frischmilch begrenzt. Sie kann auch für eine keimarme,
bakteriologisch einwandfreie Abgabe von anderen flüssigen
Nahrungs- und Genußmitteln Verwendung finden.

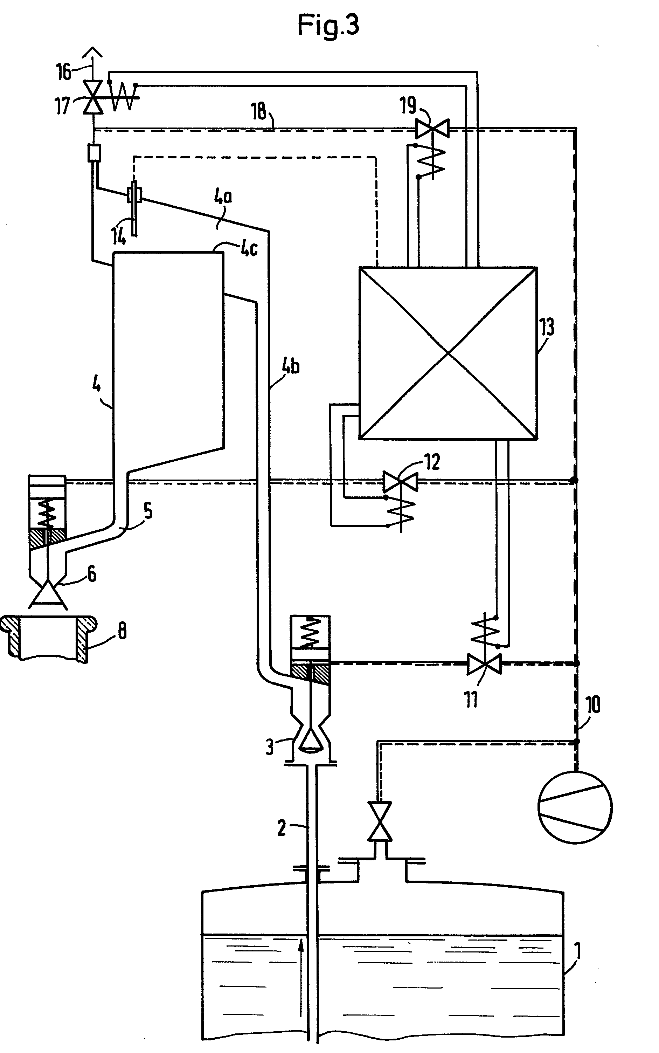

Auch bei dem in Fig. 3 gezeigten Ausführungsbeispiel ist
der über die Leitung 10 mit Druckluft versorgte Vorratsbehälter 1 für Frischmilch über die Rohrleitung 2 und
das Einlaßventil 3 mit dem Meßgefäß 4 verbunden. Mit 5
ist das Ablaufrohr und mit 6 das Auslaßventil bezeichnet.
Das Meßgefäß ist ein Überlauf-Meßgefäß mit Überlaufkammer
4a und Zulaufrohr 4b. Das Zulaufrohr 4b ist gleichzeitig
auch Rückflußrohr für die über den oberen Rand 4c des Meßgefäßes 4 anstehende Flüssigkeitsmenge. Am höchsten
Punkt der Überlaufkammer 4a ist die Entlüftungsleitung 16
angeschlossen, die über das Ventil 17 das Meßgefäß beim
Füllen entlüftet.

Für das Entleeren der Überlaufkammer und das nachfolgende
Entleeren des Meßgefäßes für die Milchabgabe an den Verbraucher, wird die Milch im Meßgefäß nach dem Füllvorgang mit Druckluft beaufschlagt. Zu diesem Zweck ist die Entlüftungsleitung 16 über einen Abzweig 18 unter Zwischenschaltung eines Ventils 19 mit der Druckluftleitung 10 verbunden. Die Ventile 17 und 19 sind so über ein Steuergerät 13 geschaltet, daß stets das eine Ventil geschlossen ist, wenn das andere Ventil geöffnet ist. Die Entlüftungsleitung 16 dient somit auch der Druckluftzuführung, so daß hierdurch ein direkter Rohranschluß an das Meßgefäß eingespart wird.

Die Betätigung der Ventile 3, 17 und 19 wird über den Füllungsfühler 5 ausgelöst, der bei gefülltem Meßgefäß mit Überlaufkammer einen entsprechenden Impuls an das Steuergerät 13 weitergibt. Das Steuergerät 13 ist so programmiert, daß sich zuerst - bei überfülltem Meßgefäß - die Entlüftungsleitung 16 schließt und dann die Druckluftleitung 18 öffnet. Das Einlaßventil 3 erhält seinen Schließimpuls nach Füllung des Meßgefäßes 4 vom Steuergerät 13 derart zeitverzögert, daß die sich in der Überlaufkammer 4a befindliche Milch infolge Druckausgleich über die Leitung 4b zurückfließen kann.

Sofort danach wird das Einlaßventil 13 durch Offnen des Magnetventils 11 mittels Druckluft geschlossen. Die Station befindet sich in Bereitschaft zur Abgabe der Frischmilch an den Verbraucher.

Nach Öffnung des Auslaßventils 6 durch Öffnung des Magnetventils 12 wird die über die Leitung 18 mit sterilfiltrierter Druckluft beaufschlagte Milch aus dem Meßgefäß 4 in die Verbraucherflasche gedrückt.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

A n s p r ü c h e
=================

1. Verfahren zur dosierten Abgabe von Frischmilch aus einem
Vorratsbehälter im Selbstbedienungsverfahren, bei dem die
Milch aus dem Vorratsbehälter über einen oberen absperrbaren Zulauf in ein Meßgefäß gefördert und bei aufgefülltem Meßgefäß über einen unteren ebenfalls absperrbaren Ablauf aus dem Meßgefäß in die Verbraucherflasche
fließt, wobei, vorzugsweise während durch einen Füllungsfühler über ein elektronisches Steuergerät Schaltimpulse
zur Ventilbetätigung ausgehen, dadurch gekennzeichnet,

a) daß die gesamte Anlage unter einem Überdruck von sterilfiltrierter Druckluft steht,

b) daß mit der sterilfiltrierten Druckluft die Frischmilch
   aus dem Vorratsbehälter (1) über ein geöffnetes Einlaßventil (3) in das während des Füllvorganges durch ein
   Auslaßventil (6) unten geschlossene Meßgefäß (4) gedrückt wird bis dieses gefüllt ist,

c) danach über einen elektrischen Impuls eines Füllfühlers
   (14) das Einlaßventil (3) geschlossen und gleichzeitig

422

oder kurz danach das Auslaßventil (6) geöffnet wird,

d) die im Meßgefäß (4) befindliche Milch sodann unter direkter Beaufschlagung sterilfiltrierter Druckluft aus dem Meßgefäß (4) herausgedrückt und der Verbraucherflasche zugeführt wird und daß schließlich

e) unmittelbar nach der Entleerung das Meßgefäß (4) vorzugsweise sofort neu gefüllt wird, so daß stets eine genau abgemessene Milchmenge abgabebereit ist.

2. Verfahren nach Anspruch 1, dadurch gekennzeichnet, daß als Meßgefäß (4) ein geschlossenes Überlaufgefäß verwendet wird, die Entlüftungsleitung (16) nach Überfüllung des Meßgefäßes (4) durch Impulsgabe des Füllungsfühlers (14) geschlossen und die Leitung (18) zur direkten Druckbeaufschlagung des Meßgefäßes geöffnet wird, wobei unmittelbar danach das Einlaßventil (3) geschlossen wird, während sich das Auslaßventil (6) zur Abgabe der Milch an den Verbraucher durch Knopfdruck o. dgl. öffnen läßt.

3. Verfahren nach Anspruch 1 oder 2, dadurch gekennzeichnet, daß zur Erzielung einer bakteriologisch einwandfreien Milchabgabezone im Bereich des Milchaustritts ein zusätzlicher, sterilfiltrierter Druckluftstrom ausgeblasen wird.

4. Verfahren nach Anspruch 1 oder 2, dadurch gekennzeichnet, daß zur Abgabe von Milch gleichbleibender Dosierung in großen Abgabefolgen mindestens ein weiterer Vorratsbehälter (1) kommunizierend so hinzugeschaltet wird, daß die sterilfiltrierte Druckluft dem letzten ausgabefernen Vorratsbehälter zugeführt und die Milch dem ersten Vorratsbehälter entnommen wird.

5. Milchabgabestation, insbesondere zur Durchführung des Verfahrens nach einem der vorangehenden Ansprüche, bestehend aus

a) einem mobilen Vorratsbehälter,

b) einem dem Vorratsbehälter nachgeschalteten eichfähigen Meßgefäß mit Entlüftung sowie Einlaß- und Auslaßventil,

c) einer die Milch aus dem Vorratsbehälter in das Meßgefäßfördernden Einrichtung,

d) einem im Meßgefäß vorgesehenen Füllungsfühler und

e) einer elektrischen Steueranlage für den automatischen Ablauf der Milchabgabe,

dadurch gekennzeichnet, daß

f) ein Verdichter (9) vorgesehen ist, der über eine Versorgungsleitung (10) den Vorratsbehälter (1) mit sterilfiltrierter Druckluft versorgt,

g) das Einlaßventil (3) und das Auslaßventil (6) druckluftbetätigte Ventile sind und

h) die Ventile (3, 6) zusammen mit dem Meßgefäß (4) ebenfalls von Verdichter (9) mit Druckluft versorgt werden, die über die Versorgungsleitung (10) zugeführt wird, wobei

i) in die Druckluftleitung zu den Ventilen (3, 6) sowie zum Meßgefäß (4) elektronisch gesteuerte Magnetventile (11, 12, 19) eingeschaltet sind, die von der elektrischen Steueranlage (13) ihre Schaltimpulse erhalten.

6. Milchabgabestation nach Anspruch 5, dadurch gekennzeichnet, daß die Einlaß- und Auslaßventile (3, 6) des Meßgefäßes (4) über die Steueranlage (13) so geschaltet sind, daß unmittelbar nach der Entleerung des Meßgefäßes (4) das Auslaßventil (6) geschlossen und das Einlaßventil (3) geöffnet wird zur erneuten Auffüllung des Meßgefäßes.

7. Milchabgabestation nach Anspruch 5 oder 6 zur Durchführung des Verfahrens nach Anspruch 3, dadurch gekennzeichnet, daß in den Bereich der Milchaustrittszone eine
zusätzliche Ausblaseleitung (20) sterilfiltrierter Druckluft ausmündet, die durch ein in die Leitung (20) eingeschaltetes Magnetventil (21) absperrbar ist.

8. Milchabgabestation nach Anspruch 7, dadurch gekennzeichnet, daß der Milchaustritt mit der Mündung der Ausblaseleitung (20) zu einem abnehmbaren Auslaßkopf (22)
zusammengefaßt sind.

9. Milchabgabestation nach einem der Ansprüche 5 bis 8,
dadurch gekennzeichnet, daß die elektrische Installation,
der Verdichter (9) und die Ventile (3, 6, 11, 12, 17, 19, 21)
zusammen mit der elektrischen Steueranlage (13) einen zu
einer Einheit zusammengefaßten ortsfest angeordneten Teil der
Abgabestation bilden, während der Vorratsbehälter (1) mit
dem Meßgefäß (4) und dem Milchaustritt (7) mit Auslaßkopf (22) den mobilen Teil der Station bilden.

10. Milchabgabestation nach einem der Ansprüche 5 bis 9,
dadurch gekennzeichnet, daß in die Entlüftungsleitung (16)
ein Magnetventil (17) eingeschaltet ist, das mit Erreichen
der Sollmenge im Meßgefäß (4) über den Fülungsfühler (14)
den Schließimpuls erhält.

11. Milchabgabestation nach einem der Ansprüche 5 bis 10,
dadurch gekennzeichnet, daß die Entlüftungsleitung (16)
beim Entleeren des Meßbehälters als Druckluftzuführung

- 5 -

ausgebildet ist.

12. Milchabgabestation nach einem der Ansprüche 5 bis 11, dadurch gekennzeichnet, daß die Entlüftungsleitung (16), das Magnetventil (17) und der Füllungsfühler (14) zu einer baulichen Einheit zusammengefaßt am Meßgefäß befestigt sind.

13. Milchabgabestation nach einem der Ansprüche 5 bis 12, dadurch gekennzeichnet, daß der Vorratsbehälter (1), das Meßgefäß (4) sowie die Verbindungsleitung (2) zwischen den beiden Teilen gegen Kälteverlust isoliert sind.

0106972

Fig.1

Fig.2

Fig.3